# EUROPEAN PATENT APPLICATION

(11) **EP 4 488 969 A1**
(43) Date of publication of application: **08.01.2025**
(21) Application number: 24186120.2
(22) Date of filing: 02.07.2024
(51) Int. Cl.: G07C 5/08, G07C 5/00

(54) **SECURE VEHICLE UNIT**

(30) Priority: 07.07.2023 SE 2350880
(71) Applicant: Stoneridge Electronics AB, 169 73 Solna (SE)
(72) Inventor: WECK, Björn, 169 73 SOLNA (SE); HALLBERG, Sanna, 169 73 SOLNA (SE); ELLINGSSON, Tomas, 191 40 SOLLENTUNA (SE)
(74) Representative: Bergenstråhle & Partners AB

(57) **Abstract**

Described is a method performed by a vehicle unit (10) for providing information of vehicle related events, the method comprises obtaining (202) vehicle information data; signing (204) the obtained vehicle information data; recording (206) the signed vehicle information data; providing (208) the recorded signed vehicle information data for information of vehicle related events.

## Description

### Technical Field

The present disclosure relates generally to methods and vehicle units for recording information.

### Background

Today, transportation by vehicle requires measurement of parameters and information relating to the driver activities. This is not exclusively done to satisfy regulations regarding road transportation, but also for fleet management to measure and increase performance and efficiency, as well as for the purpose of electronic road tolling, monitoring vehicle or engine performance parameters, monitoring data relevant for special transports e.g. dangerous goods, livestock or refrigerated food etc. Therefore, most vehicles, such as lorry trucks, carry a vehicle unit to measure, store and possible also report the collected data. In this document, the term "vehicle unit" shall mean a digital unit capable of gathering information relating to the vehicle. Examples of such information may be a geographical location, driving hours, distance travelled, start time, finish time, rest time, driver name, starting location and finishing location, exhaust measurements, fuel consumption, temperature data from vehicle or cargo sensors, opening and closing of cargo doors or operation of other vehicle systems, e.g. cranes and lifts etc. Such information, in this document also known as vehicle related information data, vehicle information data or vehicle information, can further be driving video, driver identity, speed information, position information, time information, environment information, etc. One example of a vehicle unit is a digital tachograph, capable of recording and digitally compiling and storing the vehicle data including driving times and rest periods as well as periods of other work and availability taken by the driver of a heavy vehicle. Under EU legislation it is mandatory to install digital tachographs in vehicles having a mass of more than 3,5 tons. In USA, similar rules exists, relating to an Electronic Logging Device (ELD) with the purpose of recording the driver's duty and vehicle speed in order to ensure the driver is compliant with the driving hours' legislation or the working time directive or similar legislation stipulated by authorities.

The vehicle unit is normally located in the cabin of the vehicle, where the vehicle unit is arranged in the instrument board, so that the vehicle operator may operate the vehicle unit in adjacency to start or stop of a journey. In order to calculate and estimate the speed and the travel distance, or other parameters for instance as listed above, of the vehicle, the vehicle unit is connected to one or more sensors, where the sensors are capable of measuring, for instance, the motion of the wheels or other parameters. For this purpose, a motion sensor is attached to the gearbox of the vehicle to receive pulses, i.e. speed and movement information, which is sent to the tachograph.

The functionality and also the use of the data recorded in the vehicle unit is constantly developing. For example, the data recorded in the vehicle unit can be used as evidence for vehicle related events, e.g., driver salary calculation, vehicle accident, etc. Furthermore, the recorded data needs to be authentic and reliable. Hence there is a need for an improved vehicle unit and methods relating thereto.

### Summary

It is an object of the invention to address at least some of the problems and issues outlined above. It is an object of embodiments of the invention to improve the functionality of the vehicle unit. It is possible to achieve one or more of these objects and possibly others by using methods and vehicle units as defined in the attached independent claims.

As has been realized, it can be advantageous to provide data recorded by a vehicle unit in a format that can not be manipulated. For example, when using the recorded data to determine responsibility in an accident or to determine a correct payment to a driver or when a transportation is claimed to not have been performed in accordance with terms agreed upon, it can be useful to have a recording that can be verified as true. In other words, recorded data from a vehicle unit that can be used as evidence can be useful.

In a first aspect of the disclosure there is provided a method performed by a vehicle unit for providing information of vehicle related events, the method comprises obtaining vehicle information data; signing the obtained vehicle information data, recording the signed vehicle information data; providing the recorded signed vehicle information data for information of vehicle related events. Hereby signed recorded vehicle information data can be provided that can be used to verify that some event has occurred. Because of the signing procedure it can be assured that the data has not been manipulated in some way.

In accordance with one embodiment obtaining of the vehicle information data comprises gathering vehicle information data by the vehicle unit and/or receiving vehicle information data from another vehicle device.

In accordance with one embodiment the signing of the recorded vehicle information data comprises generating a signature of the vehicle unit.

In accordance with one embodiment, the method further comprises encrypting the vehicle information data prior to or after signing, such that the recording comprises recording the signed and encrypted vehicle information data.

In accordance with one embodiment, the vehicle related event comprises calculating driver salary, vehicle accident, and/or vehicle related crime.

In accordance with one embodiment, the vehicle information data comprises video data related to the vehicle.

In accordance with one embodiment, the vehicle unit is further operative for performing tolling operation, and the method further comprises obtaining tolling event data; signing the obtained tolling event data; recording the signed tolling event data; and providing the recorded tolling event data for information of vehicle related events.

In accordance with one embodiment, the method further comprises encrypting the tolling event data prior to or after signing, the recording comprises recording the signed and encrypted tolling event data.

In accordance with another aspect of the invention a vehicle unit for providing information of vehicle related events is provided. The vehicle unit comprises a processing circuitry and a memory. The memory contains instructions executable by the processing circuitry, whereby the vehicle unit (is operative for: obtaining vehicle information data; signing the obtained vehicle information data; recording the signed vehicle information data; and providing the recorded signed vehicle information data for information of vehicle related events recording vehicle information data.

In accordance with one embodiment, the vehicle unit is further operative for: encrypting the vehicle information data prior to or after signing.

In accordance with yet another aspect of the invention, a computer program comprising instructions, which, when executed by a processing circuitry of a vehicle unit, causes the vehicle unit to perform the method according to the above.

In accordance with a further another aspect of the invention, a carrier containing the computer program according to the above is provided. The carrier can be one of an electronic signal, an optical signal, a radio signal, an electric signal, or a computer readable storage medium.

In accordance with a further aspect of the invention, a vehicle comprises the vehicle unit mentioned above is provided.

### Brief Description of Drawings

The invention is now described, by way of example, with reference to the accompanying drawings, in which:
Fig. 1a and 1b schematically show a vehicle and a vehicle unit, according to possible embodiments.
Fig. 2 schematically shows the method performed by the vehicle unit, according to possible embodiments, and
Fig. 3 schematically shows a vehicle unit.

### Detailed Description

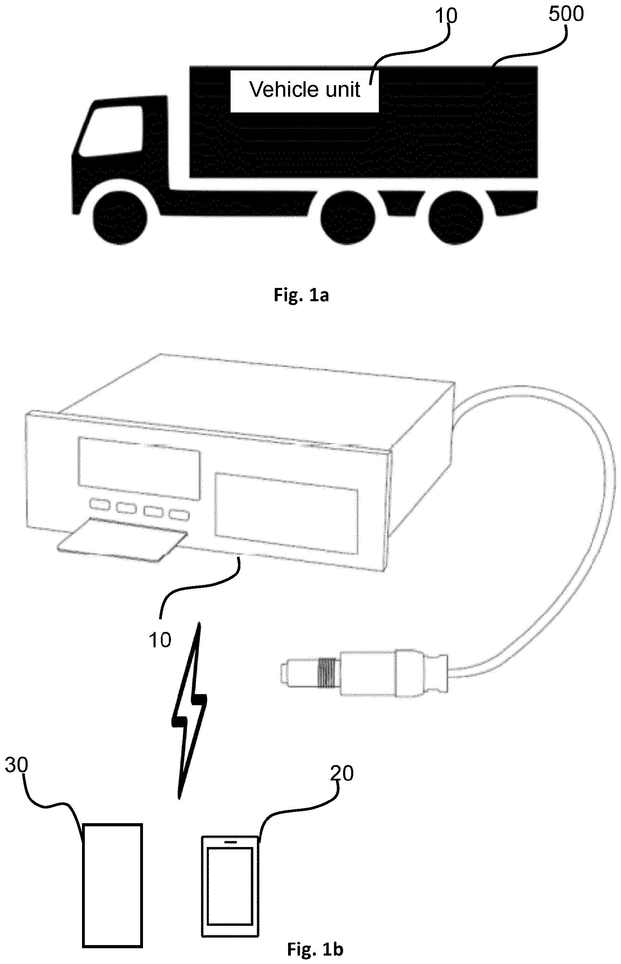

Referring to fig. 1a, a vehicle 500 can be equipped with a vehicle unit 10. The vehicle 500 can be any kind of vehicle, e.g., car, truck, bus, etc. The vehicle unit 10 can be a tachograph or some other similar device used on-board a vehicle to record data and operative for recording vehicle information data.

Referring to fig. 1b, the vehicle unit 10 may be communicatively connected to a network unit 20, and send the recorded vehicle information data to the network unit 20, so that another party can access the vehicle information data via the network entity 20. The vehicle unit 10 can also be operatively connected to one or a plurality of other vehicle devices 30 on-board the vehicle. The other vehicle device(s) 30 can be any type of device that can generate or collect data relating to the vehicle or the surroundings of the vehicle such as sensors (speed sensors, temperature sensors, light sensors, etc.) or memories holding information or similar devices.

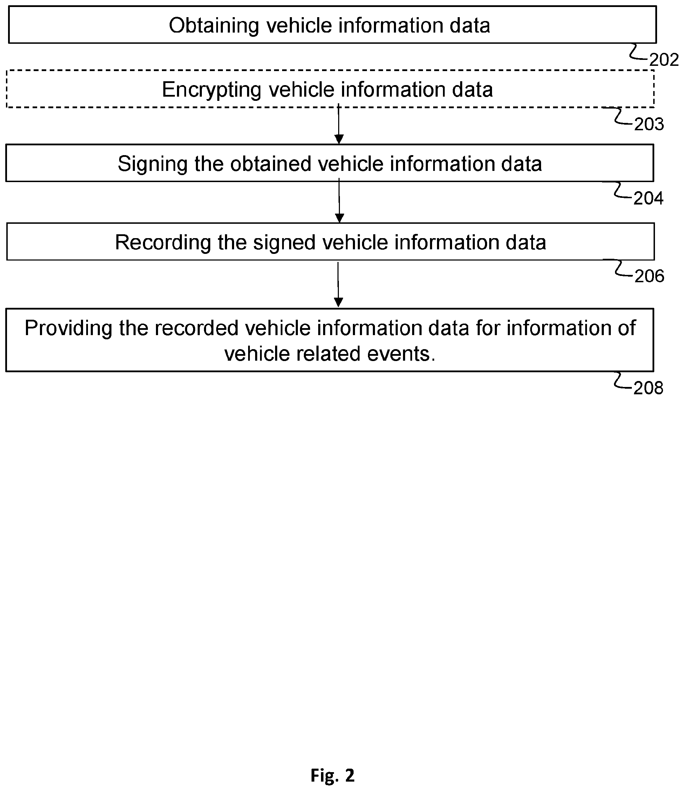

Referring to fig. 2, some steps of a method performed by a vehicle unit 10 are depicted. The vehicle unit can be configured to provide information of vehicle related events. The method comprises to first obtain 202 vehicle information data. The vehicle information data can be any data relevant for the vehicle unit to obtain such as data relating to the operation of the vehicle. Such vehicle operation data can be data indicating speed, gear, steering wheel angle, braking and similar parameters. The vehicle operation data can also be specific data recorded during an emergency event such as an accident. Also, the vehicle operation data can be related to a storage compartment of the vehicle such as temperature/humidity in a cargo compartment for storing temperature and /or humidity sensitive goods. Further the vehicle information data can relate to the driver of the vehicle. Such driver data can comprise rest time, driving time, and physiological parameters of the driver. Further, the vehicle information data can relate to the surroundings of the vehicle. Such surround data can be video, temperature data, audio, data from digital mirrors and other recordings that is informative about the surroundings where the vehicle is driven or parked. In addition, the vehicle information data can be related to a connected vehicle such as a trailer. Such connected vehicle data can be sensor data from the connected vehicle can be the similar to the data recorded for the vehicle such as temperature/humidity inside and outside the connected vehicle, braking data etc.

Next, in a step 204, some or all of the obtained vehicle information data is signed using some signing algorithm that ensures that the authenticity of the obtained vehicle information data cannot be manipulated. The signing can comprise data related to the time, location, vehicle identity, identity of a trailer vehicle, registered driver of the vehicle and similar signing data.

The signed vehicle information data is then recorded in a step 206. Typically, the signed vehicle information data can be stored in a local long-term memory, but the signed vehicle information data can also be stored at a back-up server that can be off board the vehicle itself.

The recorded signed vehicle information data can then be provided in a step 208. Thus, vehicle related events can be retrieved from the recorded vehicle information data.

Because the recorded vehicle information data is signed, the recorded vehicle information can be trusted and used as evidence to prove that some event has in fact occurred. For example, in case of an accident an insurance company can verify that some event has occurred based on the recorded signed vehicle information data. For example, video or speed recordings can be verified as true. Also, a transportation company can verify that a transport of goods has been performed on agreed terms based on the recorded signed vehicle information data. For example, a temperature log of a cooled cargo compartment can be verified and not manipulated. Also, a driver log can be verified to ensure correct pay to a driver etc.

In accordance with one embodiment, the obtaining 202 of the vehicle information data comprises gathering vehicle information data by the vehicle unit 10 and/or receiving vehicle information data from another vehicle device 30.

Hereby information from multiple data sources can be recorded by the vehicle unit and the recorded signed vehicle information data can origin from a plurality of data sources so as to make the recorded signed vehicle information data as complete as possible. All this data from other vehicle devices can then also be signed and used as evidence.

In accordance with one embodiment, the signing 204 of the recorded vehicle information data comprises generating a signature of the vehicle unit. Thus, the vehicle unit can apply a unique signature to the recorded vehicle information data. Hereby an easy to implement signing procedure can be implemented.

In accordance with one embodiment, the vehicle information can be encrypted in a step 203. The encryption in step 203 of the vehicle information data can be performed prior to or after the signing step 204. Hereby the recording 208 comprises recording the signed and encrypted vehicle information data. According to one embodiment, signing and/or encryption can be implemented by a secure microprocessor or secure microcontroller, preferably in a Secure Access Module, or Secure Application Module, (SAM), in the vehicle unit 10. According to one embodiment the SAM further comprises a secure database. In the context of the present invention, the term "secure microcontroller" should be understood as a certified microcontroller for high security applications, for example certified towards Common Criteria EAL4 and/or ITSEC E3 HIGH. A secure microcontroller is used when demands on protection of data are high. It decreases risk for manipulation of data which therefore could be seen as trusted.

Hereby it is ensured that the recorded signed vehicle information is encrypted so that it cannot easily be accessed be unauthorized persons or entities.

In accordance with some embodiments, the vehicle related event comprises events such as calculating driver salary, vehicle accident, and/or a vehicle related crime/malfunction or evidence relating to reporting damage. Thus, depending on what type of information that is retrieved from the vehicle unit, the relevant data can be retrieved in a form that can be used to prove/ verify that a particular event has occurred that relates to the vehicle.

In accordance with one embodiment, the vehicle information data comprises video data related to the vehicle. Thus, it can be advantageous to provide video data typically recorded by an on-board camera in accordance with the method set out above.

In accordance with one embodiment, the vehicle unit 10 can be further operative for performing a tolling operation. The method can then comprises obtaining tolling event data signing the obtained tolling event data; recording the signed tolling event data, and providing the recorded tolling event data for information of vehicle related events. Hereby a signed record of payment of road tolls can be provided that can be used to in a secure manner verify that a particular road toll or a similar toll has been performed by the vehicle unit. According to one embodiment, the vehicle unit 10 comprises a tolling module 18. According to one embodiment, the vehicle unit 10 comprises a vehicle positioning module 16. According to one embodiment, the SAM and/or secure microcontroller is comprised in the vehicle positioning module or the tolling module 18. According to one embodiment, the SAM and/or secure microcontroller is implemented in the vehicle positioning module or the tolling module 18 or a recording module 12 which may also be comprised in the vehicle unit 10. According to one embodiment, the SAM is arranged on the hardware 30.

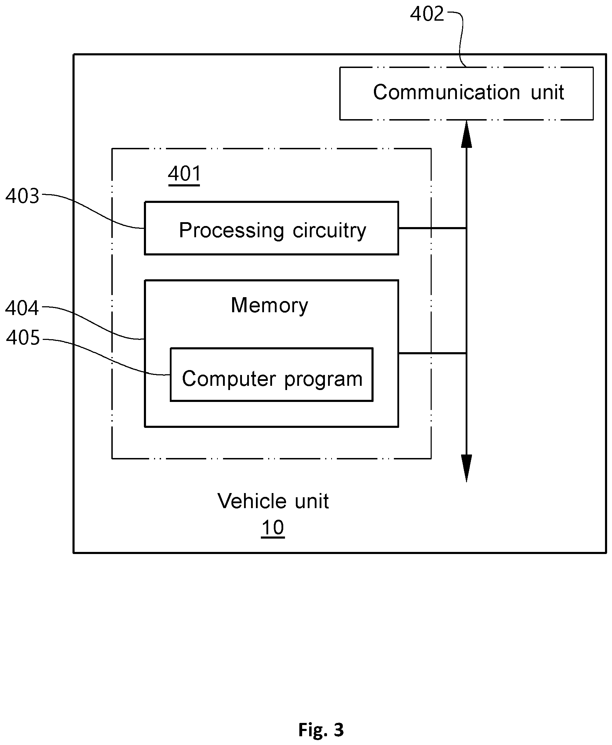

In accordance with one embodiment, referring to fig. 3, a vehicle unit 10 is provided. The vehicle unit 10 comprises a processing circuitry 403 and a memory 404, the memory 404 containing instructions executable by the processing circuitry 403, whereby the vehicle unit 10 is operative for performing any one of the methods according to above embodiments.

In accordance with one embodiment, a vehicle 500 is provided. The vehicle 500 comprises the vehicle unit 10 according to any one of above embodiments.

According to other embodiments, referring to fig. 3, the vehicle unit 10 may further comprise a communication unit 402, which may be considered to comprise conventional means for wireless or wireline communication with other devices, such as a transceiver for wireless transmission and reception of signals. The instructions executable by said processing circuitry 403 may be arranged as a computer program 405 stored e.g., in said memory 404. The processing circuitry 403 and the memory 404 may be arranged in a sub-arrangement 401. The sub-arrangement 401 may be a micro-processor and adequate software and storage therefore, a Programmable Logic Device, PLD, or other electronic component(s)/processing circuit(s) configured to perform the methods mentioned above. The processing circuitry 403 may comprise one or more programmable processor, application-specific integrated circuits, field programmable gate arrays or combinations of these adapted to execute instructions.

The computer program 405 may be arranged such that when its instructions are run in the processing circuitry, they cause the vehicle unit 10 to perform the steps described in any of the described embodiments of the vehicle unit 10 and its method. The computer program 405 may be carried by a computer program product connectable to the processing circuitry 403. The computer program product may be the memory 404, or at least arranged in the memory. The memory 404 may be realized as for example a RAM (Random-access memory), ROM (Read-Only Memory) or an EEPROM (Electrical Erasable Programmable ROM). In some embodiments, a carrier may contain the computer program 405. The carrier may be one of an electronic signal, an optical signal, an electromagnetic signal, a magnetic signal, an electric signal, a radio signal, a microwave signal, or computer readable storage medium. The computer-readable storage medium may be e.g., a CD, DVD or flash memory, from which the program could be downloaded into the memory 404. Alternatively, the computer program may be stored on a server or any other entity to which the vehicle unit 10 has access via the communication unit 402. The computer program 405 may then be downloaded from the server into the memory 404.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." Further, the term "a number of", such as in "a number of wireless devices" signifies one or more devices. All structural and functional equivalents to the elements of the above-described embodiments that are known to those of ordinary skill in the art are expressly incorporated herein by reference and are intended to be encompassed hereby. Moreover, it is not necessary for an apparatus or method to address each and every problem sought to be solved by the presently described concept, for it to be encompassed hereby. In the exemplary figures, a broken line generally signifies that the feature within the broken line is optional.

## Claims

1. A method performed by a vehicle unit (10) for providing information of vehicle related events, the method comprises:
obtaining (202) vehicle information data;
signing (204) the obtained vehicle information data;
recording (206) the signed vehicle information data;
providing (208) the recorded signed vehicle information data for information of vehicle related events.

2. The method according to claim 1, the obtaining (202) of the vehicle information data comprises gathering vehicle information data by the vehicle unit (10) and/or receiving vehicle information data from another vehicle device.

3. The method as claimed in claim 1, the signing (204) of the obtained vehicle information data comprises generating a signature of the vehicle unit (10).

4. The method according to any one of the preceding claims, further comprises encrypting (203) the vehicle information data prior to or after signing (204), such that the recording (208) comprises recording the signed and encrypted vehicle information data.

5. The method as claimed in any one of the preceding claims, the vehicle related event comprises calculating driver salary, vehicle accident, and/or vehicle related crime.

6. The method as claimed in any one of the preceding claims, the vehicle information data comprises video data related to the vehicle.

7. The method as claimed in any one of the preceding claims, the vehicle unit (10) is further operative for performing tolling operation, the method further comprises:
obtaining tolling event data;
signing the obtained tolling event data;
recording the signed tolling event data;
providing the recorded tolling event data for information of vehicle related events.

8. The method as claimed in claim 7, the method further comprises encrypting the tolling event data prior to or after signing, the recording comprises recording the signed and encrypted tolling event data.

9. A vehicle unit (10) for providing information of vehicle related events, wherein, the vehicle unit (10) comprises a processing circuitry (403) and a memory (404), the memory (404) containing instructions executable by the processing circuitry (403), whereby the vehicle unit (10) is operative for:
obtaining vehicle information data;
signing the obtained vehicle information data;
recording the signed vehicle information data;
providing the recorded signed vehicle information data for information of vehicle related events.

10. The vehicle unit (10) according to claim 9, the vehicle unit (10) is further operative for performing method according to any one of the claims 2-8.

11. A computer program (405) comprising instructions, which, when executed by a processing circuitry (403) of a vehicle unit (10), causes the vehicle unit (10) to perform the method according to any of the claims 1-8.

12. A carrier containing the computer program (405) according to claim 11, wherein the carrier is one of an electronic signal, an optical signal, a radio signal, an electric signal, or a computer readable storage medium.

13. A vehicle (500), comprising at least one vehicle unit (10) according to any one of the preceding claims 9 or 10.
